# EUROPÄISCHE PATENTANMELDUNG

(11) **EP 2 833 104 A1**
(43) Veröffentlichungstag der Anmeldung: **04.02.2015**
(21) Anmeldenummer: 14002629.5
(22) Anmeldetag: 29.07.2014
(51) Int. Cl.: G01F 1/60

(54) **Magnetisch-induktives Durchflussmessgerät und Verfahren zum Betreiben eines magnetischinduktiven Durchflussmessgeräts**

(30) Priorität: 29.07.2013 DE 102013012435; 24.09.2013 DE 102013015818
(71) Anmelder: Krohne Messtechnik GmbH, 47058 Duisburg (DE)
(72) Erfinder: Florin, Wilhelm, D - 47198 Duisburg (DE); Dabrowski, Markus, D - 47269 Duisburg (DE)
(74) Vertreter: Gesthuysen Patent- und Rechtsanwälte

(57) **Zusammenfassung**

Beschrieben und dargestellt ist eine zu einem magnetisch-induktiven Durchflussmessgerät gehörende Magnetfelderzeugungseinrichtung (1) zur Erzeugung eines zumindest auch senkrecht zur Längsachse eines nicht dargestellten Messrohrs verlaufenden wechselnden Magnetfeldes, wobei im dargestellten Ausführungsbeispiel zu der Magnetfelderzeugungseinrichtung (1) mindestens eine Feldspule (2), ein Stromregler (3), eine Umschaltbrücke (4) und ein Mikrocontroller (5) gehören.

Erfindungsgemäß sind für die Spulenstromversorgung zwei unterschiedliche Spulenspannungen zur Verfügung gestellt, nämlich eine Anfangsspannung und eine niedrigere Funktionsspannung, und ist ein Spannungsumschalter (6) für das Umschalten von der Anfangsspannung auf die Funktionsspannung - und umgekehrt - vorgesehen.

## Beschreibung

Die Erfindung betrifft ein magnetisch-induktives Durchflussmessgerät, mit mindestens einem Messrohr für den Durchfluss eines elektrisch leitenden Mediums, mit einer Magnetfelderzeugungseinrichtung zur Erzeugung eines zumindest auch senkrecht zur Längsachse des Messrohrs verlaufenden wechselnden Magnetfeldes, mit mindestens zwei - insbesondere das Medium berührenden - Messelektroden und mit einer Auswerteschaltung, wobei die Magnetfelderzeugungseinrichtung mindestens eine Feldspule, vorzugsweise einen Stromregler, vorzugsweise eine Umschaltbrücke und vorzugsweise einen Mikrocontroller aufweist. Die Erfindung betrifft auch ein Verfahren zum Betreiben eines magnetisch-induktiven Durchflussmessgeräts.

Aus der DE 199 07 864 A 1 ist ein magnetisch-induktives Durchflussmessgerät der zuvor beschriebenen Art bekannt. Bei diesem bekannten magnetisch-induktiven Durchflussmessgerät kann die Magnetfelderzeugungseinrichtung eine Feldspule oder zwei Feldspulen aufweisen. Das ist der Grund dafür, dass zuvor ausgeführt ist, dass die Magnetfelderzeugungseinrichtung mindestens eine Feldspule aufweist. Auch weist bei dem bekannten magnetisch-induktiven Durchflussmessgerät die Magnetfelderzeugungseinrichtung einen Stromregler, eine Umschaltbrücke und einen Mikrocontroller auf. Weil jedoch weder ein Stromregler noch eine Umschaltbrücke noch ein Mikrocontroller funktionsnotwendig sind, ist weiter oben ausgeführt, dass die Magnetfelderzeugungseinrichtung vorzugsweise einen Stromregler, vorzugsweise eine Umschaltbrücke und vorzugsweise einen Mikrocontroller aufweist.

Magnetisch-induktive Durchflussmessgeräte sind seit Jahrzehnten umfangreich im Stand der Technik bekannt. Dazu wird exemplarisch auf die Literaturstelle "Technische Durchflussmessung" von Prof. Dr.-Ing. K.W. Bonfig, 3. Auflage, Vulkan-Verlag Essen, 2002, Seiten 123 bis 167, und auch auf die Literaturstelle "Grundlagen Magnetisch-Induktive Durchflussmessung" von Dipl.-Ing. Friedrich Hoffmann, 3. Auflage, 2003, Druckschrift der Firma KROHNE Messtechnik GmbH & Co. KG, verwiesen.

Das grundlegende Prinzip eines magnetisch-induktiven Durchflussmessgeräts zur Durchflussmessung eines strömenden Mediums geht auf Michael Faraday zurück, der bereits im Jahre 1832 vorgeschlagen hat, das Prinzip der elektromagnetischen Induktion zur Messung der Strömungsgeschwindigkeit eines elektrisch leitfähigen Mediums anzuwenden.

Nach dem faradayschen Induktionsgesetz entsteht in einem von einem Magnetfeld durchsetzten strömenden, elektrisch leitfähigen Medium eine elektrische Feldstärke senkrecht zur Strömungsrichtung des Mediums und senkrecht zum Magnetfeld. Das faradaysche Induktionsgesetz wird bei magnetisch-induktiven Durchflussmessgeräten dadurch ausgenutzt, dass mittels einer Magnetfelderzeugungseinrichtung, die mindestens eine Feldspule, üblicherweise zwei Feldspulen aufweist, ein während des Messvorgangs sich zeitlich veränderndes Magnetfeld erzeugt wird und das Magnetfeld wenigstens teilweise das durch ein Messrohr strömende elektrisch leitfähige Medium durchsetzt. Dabei weist das erzeugte Magnetfeld wenigstens eine Komponente senkrecht zur Längsachse des Messrohrs bzw. senkrecht zur Strömungsrichtung des Mediums auf.

Wenn es einleitend heißt, dass zu dem in Rede stehenden magnetisch-induktiven Durchflussmessgerät mindestens eine Magnetfelderzeugungseinrichtung "zur Erzeugung eines zumindest auch senkrecht zur Längsachse des Messrohrs verlaufenden Magnetfeldes" gehört, dann sei hier noch einmal darauf hingewiesen, dass das Magnetfeld zwar vorzugsweise senkrecht zur Längsachse des Messrohrs bzw. senkrecht zur Strömungsrichtung des Mediums verläuft, ausreichend jedoch ist, dass eine Komponente des Magnetfeldes senkrecht zur Längsachse des Messrohrs bzw. senkrecht zur Strömungsrichtung des Mediums verläuft.

Eingangs ist auch ausgeführt, dass zu dem in Rede stehenden magnetisch-induktiven Durchflussmessgerät mindestens zwei - insbesondere das Medium berührende - Messelektroden gehören. Diese Messelektroden dienen zum Abgreifen einer in dem strömenden Medium induzierten Messspannung. Vorzugsweise verläuft die virtuelle Verbindungslinie der beiden Messelektroden zumindest im Wesentlichen senkrecht zur Richtung des das Messrohr senkrecht zur Längsachse des Messrohrs durchsetzenden Magnetfeldes. Insbesondere können die Messelektroden so vorgesehen sein, dass deren virtuelle Verbindungslinie tatsächlich - mehr oder weniger - senkrecht zur Richtung des das Magnetfeld durchsetzenden Magnetfeldes verläuft.

Schließlich ist eingangs ausgeführt, dass es sich bei den Messelektroden insbesondere um solche handeln kann, die das Medium berühren. Tatsächlich kann selbstverständlich die durch Induktion im strömenden, elektrisch leitfähigen Medium erzeugte elektrische Feldstärke durch direkt, also galvanisch mit dem Medium in Kontakt stehende Messelektroden als Messspannung abgegriffen werden. Es gibt aber auch magnetisch-induktive Durchflussmessgeräte, bei denen die Messspannung nicht durch direkt, also nicht durch galvanisch mit dem Medium in Kontakt stehende Messelektroden abgegriffen wird, vielmehr die Messspannung kapazitiv erfasst wird.

Magnetisch-induktive Durchflussmessgeräte sind im industriellen Bereich anfangs mit einem magnetischen Wechselfeld betrieben worden. Aus Kostengründen ist dabei die Feldspule bzw. sind die Feldspulen an das vorhandene Wechselspannungsnetz angeschlossen worden, so dass das Magnetfeld im Wesentlichen sinusförmig seine Feldstärke ändert. Das Betreiben von magnetisch-induktiven Durchflussmessgeräten mit einem Magnetfeld, das seine Feldstärke im Wesentlichen sinusförmig ändert, hat jedoch Nachteile (siehe die DE 199 07 864 A1, Spalte 1, Zeile 53, bis Spalte 2, Zeile 13).

Seit Mitte der 70er Jahre haben sich zunehmend magnetisch-induktive Durchflussmessgeräte durchgesetzt, die mit einem geschalteten magnetischen Gleichfeld arbeiten, bei denen also mit einem geschalteten Gleichstrom als Spulenstrom gearbeitet wird. Wird mit einem geschalteten magnetischen Gleichfeld gearbeitet, sind Nachteile vermieden, die dann auftreten, wenn mit einem Magnetfeld gearbeitet wird, dessen Feldstärke sich im Wesentlichen sinusförmig ändert, es gibt jedoch auch Probleme, wenn mit einem geschalteten magnetischen Gleichfeld gearbeitet wird (vgl. die DE 199 07 864 A 1, Spalte 2, Zeilen 18 bis 41).

Der Erfindung, die in der DE 199 07 864 A 1 beschrieben ist, lag die Aufgabe zugrunde, das bekannte, mit einem geschalteten magnetischen Gleichfeld arbeitende magnetisch-induktive Durchflussmessgerät so auszugestalten und weiterzubilden, dass die erläuterten, systembedingten Umschaltphasen kürzer sind als bei den zuvor im Stand der Technik bekannt gewesenen magnetisch-induktiven Durchflussmessgeräten, so dass die Feldfrequenz, also die Frequenz, mit der das magnetische Gleichfeld umgeschaltet wird, erhöht werden kann (vgl. die DE 199 07 864 A 1, Spalte 2, Zeilen 42 bis 49).

Im Einzelnen ist bei dem bekannten magnetisch-induktiven Durchflussmessgerät eine Zusatzstromquelle vorgesehen und ist mittels der Zusatzstromquelle unmittelbar zu Beginn einer jeden Halbwelle des als geschalteter Gleichstrom vorliegenden Spulenstroms ein Zusatzstrom in die Feldspule bzw. in die Feldspulen einspeisbar (vgl. die DE 199 07 864 A 1, Spalte 2, Zeilen 50 bis 57, den Patentanspruch 1, aber auch die weitere Erläuterung in Spalte 2, Zeile 58, bis Spalte 4, Zeile 7, und die Patentansprüche 2 bis 10).

Selbstverständlich gibt es magnetisch-induktive Durchflussmessgeräte ganz unterschiedlicher Nennweiten und mit ganz unterschiedlicher Baugeometrie. Das führt dazu, dass die elektrischen Kenndaten der Feldspule bzw. der Feldspulen, vor allem die Induktivität und der Widerstand, der für verschiedene magnetisch-induktive Durchflussmessgeräte verwendeten Feldspulen sehr unterschiedlich sind. Damit sind auch die vom Verhältnis der Induktivität zum Widerstand abhängigen Zeitkonstanten der Feldspulen sehr unterschiedlich.

Will man nicht für jedes magnetisch-induktive Durchflussmessgerät, beispielsweise für magnetisch-induktive Durchflussmessgeräte mit unterschiedlichen Nennweiten, jeweils eine eigene Spulenstromversorgung konzipieren, dann muss eine Spulenstromversorgung, die für ganz unterschiedliche Feldspulen verwendbar sein soll, so ausgelegt sein, dass zum Beispiel auch bei einem relativ großen Widerstand der gewollte Spulenstrom fließen kann und dass bei einer relativ großen Induktivität und einem relativ kleinen Widerstand die auch von der Zeitkonstanten abhängige Einschwingzeit nicht zu groß ist. Folglich liegt der Erfindung die Aufgabe zugrunde, ein magnetisch-induktives Durchflussmessgerät anzugeben, bei dem eine bestimmte Spulenstromversorgung für im Übrigen sehr unterschiedliche magnetisch-induktive Durchflussmessgeräte eingesetzt werden kann, nämlich vor allem für magnetisch-induktive Durchflussmessgeräte mit sehr unterschiedlichen Feldspulen oder / und mit sehr unterschiedlichen Anforderungen an die benötigte Feldstärke.

Das erfindungsgemäße magnetisch-induktive Durchflussmessgerät ist nun zunächst und im Wesentlichen dadurch gekennzeichnet, dass für die Spulenstromversorgung zwei unterschiedliche Spulenspannungen zur Verfügung gestellt sind, nämlich eine Anfangsspannung und eine niedrigere Funktionsspannung, und dass ein Spannungsumschalter für das Umschalten von der Anfangsspannung auf die Dauerspannung - und umgekehrt - vorgesehen ist. Das bedarf der Erläuterung:
Weiter oben ist bereits erläutert, dass bei dem bekannten magnetisch-induktiven Durchflussmessgerät, von dem die Erfindung ausgeht, eine Zusatzstromquelle vorgesehen ist und mittels der Zusatzstromquelle unmittelbar zu Beginn einer jeden Halbwelle des als geschalteter Gleichstrom vorliegenden Spulenstroms ein Zusatzstrom in die Feldspule bzw. in die Feldspulen eingespeist wird; das führt zu der angestrebten Verkürzung der Einschwingzeit (vgl. die Fig. 4 in der DE 199 07 864 A1).

Auch bei dem erfindungsgemäßen magnetisch-induktiven Durchflussmessgerät wird - bei ansonsten unveränderten Verhältnissen - die Einschwingzeit verkürzt, nämlich dadurch, dass zunächst eine Anfangsspannung und dann eine niedrigere Funktionsspannung zur Verfügung gestellt wird. Die Anfangsspannung ist also größer als die Funktionsspannung, wobei die Funktionsspannung die Spannung ist, die für den eigentlichen Messbetrieb erforderlich ist, die also den - konstanten - Spulenstrom fließen lässt, der zu der gewollten magnetischen Feldstärke im Messrohr bzw. im durch das Messrohr fließenden Medium führt. Erfindungsgemäß wird aber mehr erreicht als eine Verkürzung der Einschwingzeit. Das wird weiter unten noch erläutert.

Für das erfindungsgemäße magnetisch-induktive Durchflussmessgerät ist wesentlich, dass die Anfangsspannung größer ist als die Funktionsspannung. So kann die Funktionsspannung relativ klein sein, nämlich dann, wenn der Widerstand der Feldspule bzw. der Feldspulen relativ klein ist oder / und der - die erforderliche magnetische Feldstärke bestimmende - Spulenstrom relativ gering ist. Die erforderliche Funktionsspannung kann aber auch relativ groß sein, nämlich dann, wenn der Widerstand der Feldspule bzw. der Feldspulen relativ groß ist oder / und - der geforderten magnetischen Feldstärke wegen - der notwendige Spulenstrom relativ groß ist. Bei dem erfindungsgemäßen magnetisch-induktiven Durchflussmessgerät muss also die Spulenstromversorgung insgesamt so ausgelegt sein, dass auch bei der größten Funktionsspannung, die im Einzelfall erforderlich sein kann, noch der Maßgabe genügt werden kann, dass die Anfangsspannung größer ist als die Funktionsspannung.

Das, was zuvor ausgeführt ist, berücksichtigend, kann die Spulenstromversorgung bei dem erfindungsgemäßen magnetisch-induktiven Durchflussmessgerät in ganz unterschiedlicher Weise realisiert sein. Insbesondere kann die für das erfindungsgemäße magnetisch-induktive Durchflussmessgerät insgesamt zur Verfügung stehende Versorgungsspannung die Anfangsspannung sein. Insbesondere dann, aber nicht nur dann, kann die Funktionsspannung durch eine Pulsweitenmodulation aus der Versorgungsspannung gewonnen werden. Dann, aber nicht nur dann, kann zur Erzeugung der Funktionsspannung ein PWM-gesteuerter Schaltregler vorgesehen sein.

Dass bei dem erfindungsgemäßen magnetisch-induktiven Durchflussmessgerät zur Erzeugung eines geschalteten magnetischen Gleichfelds und damit zur Erzeugung eines geschalteten Gleichstroms als Spulenstrom eine Umschaltbrücke vorgesehen sein kann, ist weiter oben bereits ausgeführt, - und bei dem bekannten magnetisch-induktiven Durchflussmessgerät, von dem die Erfindung ausgeht, ist eine solche Umschaltbrücke vorgesehen (vgl. in der DE 199 07 864 A 1 Spalte 4, Zeilen 53 bis 67, und die Umschaltbrücke 13 in der Fig. 3). Ist nun auch bei dem erfindungsgemäßen magnetisch-induktiven Durchflussmessgerät eine Umschaltbrücke vorgesehen, im Übrigen auch ein Mikrocontroller vorgesehen (siehe den Mikrocontroller 18 bei dem aus der DE 199 07 864 A 1 bekannten magnetisch-induktiven Durchflussmessgerät), dann empfiehlt sich eine Ausführungsform des erfindungsgemäßen magnetisch-induktiven Durchflussmessgeräts, die dadurch gekennzeichnet ist, dass die Umschaltbrücke vom Mikrocontroller umgesteuert wird.

Ist bei dem erfindungsgemäßen magnetisch-induktiven Durchflussmessgerät ein Mikrocontroller vorgesehen, durch den, wie zuvor erläutert, die Umschaltbrücke umgesteuert werden kann, dann, aber nicht nur dann, empfiehlt es sich, den Spannungsumschalter vom Mikrocontroller zu steuern.

Weiter oben ist gesagt, dass erfindungsgemäß nicht nur die Einschwingzeit verkürzt wird, dass erfindungsgemäß mehr erreicht wird. Wesentlich für das erfindungsgemäße magnetisch-induktive Durchflussmessgerät ist, wie mehrfach ausgeführt, dass zwei unterschiedliche Spulenspannungen zur Verfügung gestellt sind, nämlich eine Anfangsspannung und eine niedrigere Funktionsspannung. Da die Anfangsspannung größer als die Funktionsspannung ist, muss die Anfangsspannung so gewählt sein, dass sie größer ist als die maximal erforderliche Funktionsspannung, also die Funktionsspannung, die für den erforderlichen Spulenstrom benötigt wird, wenn der Widerstand der Feldspule bzw. der Feldspulen relativ groß ist und wenn - der geforderten magnetischen Feldstärke wegen - ein relativ großer Spulenstrom fließen soll. Ist die Spulenstromversorgung so realisiert, wird jedoch eine kleinere Funktionsspannung als die maximale Funktionsspannung, insbesondere eine relativ kleine Funktionsspannung benötigt, dann würde die in der Feldspule bzw. in den Feldspulen nicht "verbrauchte" Leistung im Stromregler "verbraucht", nämlich als unerwünschte Verlustleistung. Das wird erfindungsgemäß dadurch verhindert, dass einerseits eine Anfangsspannung zur Verfügung gestellt wird, die eine gewünscht kurze Einschwingzeit realisiert, dass anderseits nur eine solche Funktionsspannung zur Verfügung gestellt wird, die für den jeweiligen Einzelfall funktionsnotwendig ist.

Ist bei dem erfindungsgemäßen magnetisch-induktiven Durchflussmessgerät, wie auch bei dem magnetisch-induktiven Durchflussmessgerät, von dem die Erfindung ausgeht, und wie heute üblich, ein Mikrocontroller vorgesehen, so kann der Mikrocontroller bei dem erfindungsgemäßen magnetisch-induktiven Durchflussmessgerät drei Funktionen haben, nämlich die Funktion der Umsteuerung der Umschaltbrücke, die Funktion der Steuerung des Spannungsumschalters und die Funktion der Steuerung bzw. der Regelung der Funktionsspannung. Der Mikrocontroller gibt dann also nicht nur vor, wann von der Anfangsspannung auf die Funktionsspannung - und umgekehrt - umgeschaltet wird, er gibt auch vor, welche Funktionsspannung an der Feldspule bzw. an den Feldspulen zur Verfügung steht.

Selbstverständlich sind neben den schon beschriebenen Ausgestaltungen und Weiterbildungen des erfindungsgemäßen magnetisch-induktiven Durchflussmessgeräts weitere Ausgestaltungen und Weiterbildungen, auch Abwandlungen möglich.

Weiter oben ist ausgeführt, dass bei dem erfindungsgemäßen magnetisch-induktiven Durchflussmessgerät die Anfangsspannung die Versorgungsspannung sein kann. Sinnvoll kann jedoch auch eine Ausführungsform sein, bei der die Anfangsspannung zwar aus der Versorgungsspannung gewonnen wird, aber nicht die Versorgungsspannung direkt ist. So kann die Anfangsspannung in vergleichbarer Weise wie die Funktionsspannung durch eine Pulsweitenmodulation aus der Versorgungsspannung gewonnen werden, kann auch insoweit zur Erzeugung der Anfangsspannung ein PWM-gesteuerter Schaltregler vorgesehen sein.

Bei dem bekannten magnetisch-induktiven Durchflussmessgerät, von dem die Erfindung ausgeht, ist, wie bereits ausgeführt, ein Stromregler vorgesehen (Stromregler 11 in der Fig. 3 der DE 199 07 864 A1). Ein solcher Stromregler ist, wie ausgeführt, in der Regel auch bei dem erfindungsgemäßen magnetisch-induktiven Durchflussmessgerät vorgesehen. Jedoch kann statt eines Stromreglers auch ein Strommesswiderstand vorgesehen sein. Der Spulenstrom durch die Feldspule bzw. durch die Feldspulen ist dann proportional der Funktionsspannung. Bei dieser Ausführungsform muss der tatsächlich fließende Spulenstrom gemessen werden, nämlich mit Hilfe des Strommesswiderstandes, damit er bei der Ermittlung des Durchflusses rechnerisch berücksichtigt werden kann.

Ist bei dem erfindungsgemäßen magnetisch-induktiven Durchflussmessgerät statt eines Stromreglers ein Strommesswiderstand vorgesehen, dann kann der dem Spulenstrom proportionale Spannungsabfall am Strommesswiderstand als Referenzspannung verwendet werden, also aus der Messelektrodenspannung an den Messelektroden und der Referenzspannung der Durchfluss bestimmt werden.

Im Übrigen kann es zweckmäßig sein, bei dem erfindungsgemäßen magnetisch-induktiven Durchflussmessgerät den Takt des PWM-Signals mit dem Takt der Messung der Messelektrodenspannung zu synchronisieren. Dabei kann der Takt des PWM-Signals dem Takt der Messung der Messelektrodenspannung entsprechen, der Takt des PWM-Signals kann aber auch ohne Weiteres dem n-fachen des Takts der Messung der Messelektrodenspannung entsprechen, wobei n vorzugsweise eine ganze Zahl größer als Null ist.

Für das erfindungsgemäße magnetisch-induktive Durchflussmessgerät kann eine bevorzugte Funktionsweise wie folgt beschrieben werden:
Der Mikrocontroller erfasst den Spannungsabfall über dem Stromregler oder, falls anstelle eines Stromreglers ein Strommesswiderstand vorgesehen ist, über den Strommesswiderstand und bestimmt davon abhängig den Umschaltzeitpunkt des Spannungsumschalters und die Einstellung des PWM-gesteuerten Schaltreglers, also die Einstellung der Funktionsspannung.

Zweckmäßigerweise arbeitet das erfindungsgemäße magnetisch-induktive Durchflussmessgerät insoweit pulsierend, als einem Messbetrieb eine Messpause, der Messpause wieder ein Messbetrieb, dem Messbetrieb wieder eine Messpause usw. folgen. Das wird weiter unten noch erläutert. Wie eingangs ausgeführt, betrifft die Erfindung auch ein Verfahren zum Betreiben eines magnetisch-induktiven Durchflussmessgeräts. Dieses Verfahren ist bei einem magnetisch-induktiven Durchflussmessgerät der eingangs beschriebenen Art im Wesentlichen dadurch gekennzeichnet, dass für die Spulenstromversorgung zwei unterschiedliche Spulenspannungen zur Verfügung gestellt werden, nämlich eine Anfangsspannung und eine niedrigere Funktionsspannung, und dass von der Anfangsspannung auf die Funktionsspannung - und umgekehrt - umgeschaltet wird, nämlich mit Hilfe eines Spannungsumschalters. Dabei kann im Einzelnen so vorgegangen werden, wie das zuvor in Verbindung mit dem erfindungsgemäßen magnetisch-induktiven Durchflussmessgerät beschrieben worden ist. Insbesondere kann dann, wenn statt eines Stromreglers in Reihe zu der Feldspule bzw. zu den Feldspulen ein Strommesswiderstand vorgesehen ist, der am Strommesswiderstand auftretende Spannungsabfall als Referenzspannung verwendet werden und aus der Messelektrodenspannung an den Messelektroden und der Referenzspannung der Durchfluss bestimmt werden.

Wie dargelegt, gibt es verschiedene Möglichkeiten, das erfindungsgemäße magnetisch-induktive Durchflussmessgerät auszugestalten und weiterzubilden. Dazu wird verwiesen auf die auf den Patentanspruch 1 rückbezogenen Patentansprüche und auf die folgende Beschreibung in Verbindung mit der Zeichnung. In der Zeichnung zeigen
- Fig. 1: das Schaltbild einer bevorzugten Ausführungsform einer zu einem erfindungsgemäßen magnetisch-induktiven Durchflussmessgerät gehörenden Magnetfelderzeugungseinrichtung,
- Fig. 2: eine erste graphische Darstellung,
- Fig. 3: eine zweite graphische Darstellung und
- Fig. 4: eine dritte graphische Darstellung;
auch anhand der graphischen Darstellungen in den Fig. 2 bis 4 wird nachfolgend die Erfindung erläutert.

Zu einem magnetisch-induktiven Durchflussmessgerät gehören - funktions-notwendig - ein nicht dargestelltes Messrohr für den Durchfluss eines elektrisch leitenden Mediums, eine Magnetfelderzeugungseinrichtung 1 zur Erzeugung eines zumindest auch senkrecht zur Längsachse des nicht dargestellten Messrohrs verlaufenden wechselnden Magnetfeldes, mindestens zwei - insbesondere das Medium berührende -, ebenfalls nicht dargestellte Messelektroden und eine wiederum nicht dargestellte Auswerteschaltung.

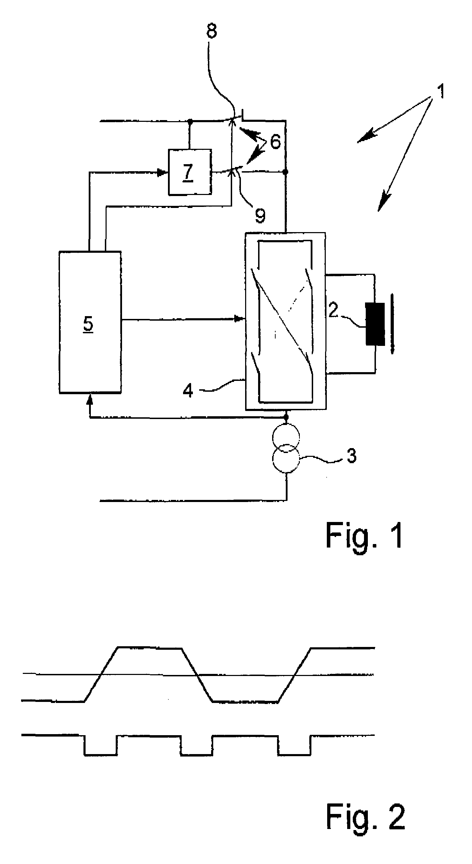

Wie Fig. 1 entnommen werden kann, gehören zu der Magnetfelderzeugungseinrichtung 1 mindestens eine Feldspule 2 sowie vorliegend ein Stromregler 3, eine Umschaltbrücke 4 und ein Mikrocontroller 5. Nicht dargestellt ist, dass statt eines Stromreglers 3 auch ein Strommesswiderstand in Reihe zu der Feldspule 2 (bzw. in Reihe zu Feldspulen) vorgesehen sein kann.

Erfindungsgemäß sind für die Spulenstromversorgung, also die Stromversorgung der Feldspule 2 bzw. von zwei Feldspulen, zwei unterschiedliche Spulenspannungen zur Verfügung gestellt, nämlich eine Anfangsspannung und eine niedrigere Funktionsspannung. Es ist ein Spannungsumschalter 6 für das Umschalten von der Anfangsspannung auf die Funktionsspannung - und umgekehrt - vorgesehen.

In dem in der Fig. 1 dargestellten Ausführungsbeispiel ist die Anfangsspannung die Versorgungsspannung. Die Funktionsspannung wird durch eine Pulsweitenmodulation aus der Versorgungsspannung gewonnen. Im Ausführungsbeispiel ist zur Erzeugung der Funktionsspannung ein PWM-gesteuerter Schaltregler 7 vorgesehen.

Für das in der Fig. 1 dargestellte Ausführungsbeispiel einer Magnetfelderzeugungseinrichtung 1 eines erfindungsgemäßen magnetisch-induktiven Durchflussmessgeräts gilt weiter, dass die Umschaltbrücke 4 und der Spannungsumschalter 6 jeweils vom Mikrocontroller 5 umgesteuert bzw. gesteuert werden.

Die Fig. 1 zeigt, dass der Spannungsabfall über dem Stromregler 3 dem Mikrocontroller 5 zugeführt wird. Die Umschaltbrücke 4 wird vom Mikrocontroller 5 gesteuert und auch der Spannungsumschalter 6 wird vom Mikrocontroller 5 gesteuert. Außerdem beeinflusst der Mikrocontroller 5 den PWMgesteuerten Schaltregler 7 - in Abhängigkeit vom Spannungsabfall über den Stromregler 3 - so, dass die Funktionsspannung den Wert hat, der erforderlich ist, dass der Spulenstrom über die Feldspule 2 bzw. die Feldspulen so groß ist, dass die geforderte magnetische Feldstärke - im nicht dargestellten Messrohr bzw. in dem durch das Messrohr fließenden Medium - vorliegt.

In dem in der Fig. 1 dargestellten Ausführungsbeispiel hat der Spannungsumschalter 6 einen Öffner 8 und einen Schließer 9. Der Spannungsumschalter 6 bekommt sein Steuersignal vom Mikrocontroller 5. Ohne ein Steuersignal vom Mikrocontroller 5 sind also der Öffner 8 geschlossen und der Schließer 9 geöffnet, während beim Vorliegen eines Steuersignals vom Mikrocontroller 5 der Öffner 8 geöffnet und der Schließer 9 geschlossen sind. Die daraus resultierenden Zusammenhänge für den Spulenstrom in der Feldspule 2 zeigt die graphische Darstellung in Fig. 2. Im unteren Teil dieser graphischen Darstellung ist das Vorliegen bzw. Nicht-Vorliegen eines Steuerimpulses vom Mikrocontroller 5 dargestellt, im oberen Teil der graphischen Darstellung der in der Feldspule 2 fließende Spulenstrom.

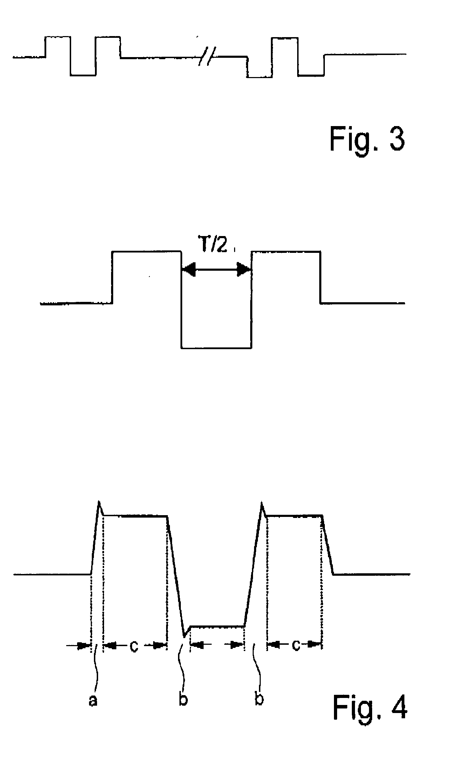

Die graphische Darstellung in Fig. 3 zeigt, dass das erfindungsgemäße magnetisch-induktive Durchflussmessgerät pulsierend betrieben werden kann, dass nämlich jeweils einem Messbetrieb eine Messpause, einer Messpause ein Messbetrieb, einem Messbetrieb eine Messpause usw. folgen kann.

Wie bereits ausgeführt, erfasst der Mikrocontroller 5 den Spannungsabfall über dem Stromregler 3 und bestimmt davon abhängig den Umschaltzeitpunkt des Spannungsumschalters 6 und die Einstellung des PWM-Schaltreglers 7.

Die graphische Darstellung in Fig. 4 zeigt im oberen Teil idealisiert den geschalteten Gleichstrom, im unteren Teil reale Verhältnisse. In den Zeitabschnitten a und b ist die Anfangsspannung wirksam, während im Zeitabschnitt c die Funktionsspannung wirksam ist. Dabei ist der Zeitabschnitt a kleiner als der Zeitabschnitt b und der Zeitabschnitt, der sich aus der Differenz des Zeitabschnitts b und des Zeitabschnitts a ergibt, soll klein sein gegenüber der halben Impulsdauer, also klein gegenüber T/2.

Wie ausgeführt, kann statt des im Ausführungsbeispiel nach Fig. 1 vorgesehenen Stromreglers 3 ein Strommesswiderstand in Reihe zu der Feldspule 2 bzw. zu Feldspulen vorgesehen sein kann. Das gibt die Möglichkeit, den am Strommesswiderstand auftretenden Spannungsabfall als Referenzspannung zu verwenden, also aus der Messelektrodenspannung an den Messelektroden und der Referenzspannung den Durchfluss zu bestimmen.

Zur Erfindung gehört zunächst das, was in den Patentansprüchen beschrieben ist. Zur Erfindung gehört aber auch das, was im allgemeinen Teil der Beschreibung und im speziellen Teil der Beschreibung dargelegt ist, und auch dann, wenn es nicht Inhalt von Patentansprüchen ist.

## Patentansprüche

1. Magnetisch-induktives Durchflussmessgerät, mit mindestens einem Messrohr für den Durchfluss eines elektrisch leitenden Mediums, mit mindestens einer Magnetfelderzeugungseinrichtung (1) zur Erzeugung eines zumindest auch senkrecht zur Längsachse des Messrohrs verlaufenden wechselnden Magnetfeldes, mit mindestens zwei - insbesondere das Medium berührenden-Messelektroden und mit einer Auswerteschaltung, wobei die Magnetfelderzeugungseinrichtung (1) mindestens eine Feldspule (2), vorzugsweise einen Stromregler (3), vorzugsweise eine Umschaltbrücke (4) und vorzugsweise einen Mikrocontroller (5) aufweist,
**dadurch gekennzeichnet,**
**dass** für die Spulenstromversorgung zwei unterschiedliche Spulenspannungen zur Verfügung gestellt werden, nämlich eine Anfangsspannung und eine niedrigere Funktionsspannung, und dass ein Spannungsumschalter (6) für das Umschalten von der Anfangsspannung auf die Funktionsspannung - und umgekehrt - vorgesehen ist.

2. Magnetisch-induktives Durchflussmessgerät nach Anspruch 1, **dadurch gekennzeichnet, dass** die Anfangsspannung die Versorgungsspannung ist.

3. Magnetisch-induktives Durchflussmessgerät nach Anspruch 1 oder 2, **dadurch gekennzeichnet, dass** die Funktionsspannung durch eine Pulsweitenmodulation aus der Versorgungsspannung gewonnen wird.

4. Magnetisch-induktives Durchflussmessgerät nach einem der Ansprüche 1 bis 3, **dadurch gekennzeichnet, dass** zur Erzeugung der Funktionsspannung ein PWM-gesteuerter Schaltregler (7) vorgesehen ist.

5. Magnetisch-induktives Durchflussmessgerät nach einem der Ansprüche 1 bis 4, wobei die Magnetfelderzeugungseinrichtung eine Umschaltbrücke (4) und einen Mikrocontroller (5) aufweist, **dadurch gekennzeichnet, dass** die Umschaltbrücke (4) vom Mikrocontroller (5) umgesteuert wird.

6. Magnetisch-induktives Durchflussmessgerät nach einem der Ansprüche 1 bis 5, wobei die Magnetfelderzeugungseinrichtung einen Mikrocontroller (5) aufweist, **dadurch gekennzeichnet, dass** der Spannungsumschalter (6) vom Mikrocontroller (5) gesteuert wird.

7. Magnetisch-induktives Durchflussmessgerät nach einem der Ansprüche 1 bis 6, **dadurch gekennzeichnet, dass** in Reihe zu der Feldspule (2) bzw. zu den Feldspulen ein Strommesswiderstand vorgesehen ist.

8. Verfahren zum Betreiben eines magnetisch-induktiven Durchflussmessgeräts, mit mindestens einem Messrohr für den Durchfluss eines elektrisch leitenden Mediums mit mindestens einer Magnetfelderzeugungseinrichtung zur Erzeugung eines zumindest auch senkrecht zur Längsachse des Messrohrs verlaufenden wechselnden Magnetfeldes, mit mindestens zwei - insbesondere das Medium berührenden - Messelektroden und mit einer Auswerteschaltung,
wobei die Magnetfelderzeugungseinrichtung mindestens eine Feldspule, vorzugsweise einen Stromregler, vorzugsweise eine Umschaltbrücke und vorzugsweise einen Mikrocontroller aufweist,
**dadurch gekennzeichnet,**
**dass** für die Spulenstromversorgung zwei unterschiedliche Spulenspannungen zur Verfügung gestellt werden, nämlich eine Anfangsspannung und eine niedrigere Funktionsspannung, und dass von der Anfangsspannung auf die Funktionsspannung - und umgekehrt - umgeschaltet wird, vorzugsweise mit Hilfe eines Spannungsumschalters.

9. Verfahren nach Anspruch 8, wobei die Magnetfelderzeugungseinrichtung einen Strommesswiderstand aufweist, **dadurch gekennzeichnet, dass** der am Strommesswiderstand auftretende Spannungsabfall als Referenzspannung verwendet wird und aus der Messelektrodenspannung an den Messelektroden und der Referenzspannung der Durchfluss bestimmt wird.
